# EUROPÄISCHE PATENTANMELDUNG

(11) **EP 1 384 857 A2**
(43) Veröffentlichungstag der Anmeldung: **28.01.2004**
(21) Anmeldenummer: 03016737.3
(22) Anmeldetag: 22.07.2003
(51) Int. Cl.: F01D 25/14, F01D 25/26, F01N 3/04

(54) **Turbinengehäuse für einen Turbolader-Verbrennungsmotor und Verfahren zum Kühlen eines Turbolader-Verbrennungsmotors**

(30) Priorität: 26.07.2002 DE 10235189
(71) Anmelder: Weber Motor AG, 88677 Markdorf (DE)
(72) Erfinder: Wizgall, Eberhard, 75428 Illingen (DE); Jenni, Hans-Rudolf, 3413 Kaltacker (CH); Wenger, Urs, 4539 Rumisberg (CH)
(74) Vertreter: Hössle Kudlek & Partner

(57) **Zusammenfassung**

Turbinengehäuse für einen Turbolader-Verbrennungsmotor für Marineanwendungen mit einem mit dem Turbinengehäuse einstückig ausgebildeten Abgaskrümmer (12, 14) und einer sowohl Turbine (16) als auch Abgaskrümmer (12, 14) umgebenden Kühleinrichtung (18, 20, 22). Die Kühleinrichtung ist ein durch Doppelwandung (18, 20) gebildeter, mit Kühlmittel beaufschlagbarer Hohlraum (22) wobei das Kühlmittel vorzugsweise Seewasser ist. Zur Kühlung eines zur Aufnahme eines Turbinenlagers dienenden Lagergehäuses (32) ist ein von der Kühleinrichtung (18, 20, 22) des Turbinengehäuses (10) separater Kühlkreislauf vorgesehen.

## Beschreibung

Die vorliegende Erfindung betrifft ein Turbinengehäuse für einen Turbolader-Verbrennungsmotor für Marineanwendungen sowie einen derartigen Turbolader-Verbrennungsmotor und des weiteren ein Verfahren zum Kühlen eines Turbolader-Verbrennungsmotors für Marineanwendungen.

Turbolader-Verbrennungsmotoren für Marineanwendungen wie Schiffe, Boote und Freizeitgeräte (Jetskis) sind bekannt. In derartigen Verbrennungsmotoren gestaltet sich die Kühlung abgasführender Bauteile wie Abgaskrümmer, Turbinengehäuse und Abgasturbolader unter Anpassung an die besonderen Umstände des Betriebs in dem Medium Wasser anders als bei Verbrennungsmotoren, die zur Anwendung in Landfahrzeugen vorgesehen sind. So ist bei bekannten Verbrennungsmotoren für Marineanwendungen das Abgaskrümmergehäuse doppelwandig mit einem Wasserkühlmantel ausgestaltet. Durch den durch die doppelwandige Gehäusekammer gebildeten Hohlraum wird zur Kühlung des Abgaskrümmers Seewasser geleitet. Das (separat ausgebildete) Turbinengehäuse bekannter Verbrennungsmotoren für Marineanwendungen wird ebenfalls durch Wasserkühlung gekühlt.

Demgegenüber werden erfindungsgemäß ein Turbinengehäuse mit dem Merkmal des Anspruchs 1, ein Turbolader-Verbrennungsmotor mit den Merkmalen des Anspruchs 7 sowie ein Verfahren zum Kühlen Turbolader-Verbrennungsmotors mit den Merkmalen des Anspruchs 10 vorgeschlagen.

Demnach werden erfindungsgemäß Turbinengehäuse und Abgaskrümmergehäuse einstückig miteinander ausgebildet und sind von einer gemeinsamen Kühleinrichtung umgeben. Damit entfällt in vorteilhafter Weise die Schnittstelle zwischen den bisher getrennt ausgebildeten Bauteilen Turbinengehäuse und Abgaskrümmegehäuse mit der Folge, daß an beiden Gehäusen keine Flansche zum Übertritt von Abgas und Kühlmittel zwischen den beiden Gehäusen mehr vorgesehen sein müssen. Des weiteren ist mit der Erfindung eine Gewichtseinsparung verbunden und es gibt eine Dichtstelle weniger. Insbesondere entfällt die bisherige Schraubverbindung von Abgaskrümmergehäuse mit dem Turbinengehäuse, die aufgrund zyklischer thermischer Dehnung sehr stark belastet ist. Als besonders vorteilhaft erweist sich die Möglichkeit, beide nun einstückig ausgebildeten Gehäuse mit einer gemeinsamen Kühleinrichtung, vorzugsweise einem Wassermantel, zu umgeben, der die heißen, gasführenden Bereiche beider Teilgehäuse ohne Unterbrechung durch einen Flansch umschließt.

In Ausgestaltung der Erfindung ist die Kühleinrichtung ein durch Doppelwandung gebildeter, mit Kühlmittel beaufschlagbarer Holraum, wobei vorzugsweise an jedem Einzelkrümmer des Abgaskrümmers ein Kühlmitteleintritt vorgesehen ist. Durch die letztgenannte Maßnahme wird eine symmetrische und gleichmäßige Einbringung des Kühlmittels in die Kühleinrichtung gewährleistet. Der Kühlmittelaustritt ist flußabwärts an der Turbine vorgesehen, so daß das Kühlmittel zunächst den Abgaskrümmer umströmt, danach die Turbine umströmt und schließlich austritt.

Für die Marineanwendungen des erfindungsgemäßen Turbolader-Verbrennungsmotors eignet sich in besonders vorteilhafter Weise Seewasser als in der Kühleinrichtung Verwendung findendes Kühlmittel.

Durch die erfindungsgemäß erzielte verbesserte Kühlwirkung ist es möglich, ein erfindungsgemäßes Turbinengehäuse mit im Vergleich zu bekannten Turbinengehäusen weniger wärmebeständigen Werkstoffen (bspw. niedrig legierte Stähle, Grauguß, Aluminium) auszubilden. Diese Werkstoffe sind im Vergleich zu hochlegierten Stählen kostengünstiger und verfügen über bessere Gießeigenschaften.

In besonders vorteilhafter Ausgestaltung der Erfindung ist für die Kühlung eines Lagergehäuses zur Aufnahme eines Turbinenlagers ein von der Kühleinrichtung des Turbinengehäuses separater Kühlkreislauf vorgesehen. Bei diesem separaten Kühlkreislauf handelt es sich vorzugsweise um eine Abzweigung aus dem ohnehin vorhandenen Motorkühlkreislauf. Somit erfolgt erfindungsgemäß eine getrennte Kühlung von Turbinengehäuse und Lagergehäuse, wobei ersteres mit einem sehr kalten Kühlmittel, nämlich Seewasser mit einer Temperatur von maximal 30 bis 35 °C, und letzteres mit einem wärmeren Kühlmittel, nämlich dem dem Motorkühlmittelkreislauf entnommenen Kühlmittel mit einer Temperatur von in der Regel über 70 °C, gekühlt wird. Dadurch wird eine sehr starke Kühlung des Turbinengehäuses mit "kaltem" Seewasser und somit eine Absenkung der Oberflächentemperatur des kombinierten Abgaskrümmer- und Turbinengehäuses bis auf durch entsprechende Marinevorschriften gegebene Grenzwerte erreicht. Durch die Verwendung des wärmeren Kühlmittels aus dem Motorkühlmittelkreislauf für die Lagerkühlung verringert sich im Vergleich zu einer Kühlung mit kälterem Kühlmittel die Lagerreibung, wodurch ein verbessertes Ansprechverhalten und ein verbesserter Gesamtwirkungsgrad des Turboladers erzielt werden.

Ein erfindungsgemäßes Verfahren zum Kühlen eines Turbolader-Verbrennungsmotors für Marineanwendungen besteht darin, zur Kühlung eines Turbinenlagers des Turboladers Kühlmittel einem aus Motorblock, Thermostat, Kühler und Kühlmittelpumpe gebildeten Kühlmittelkreislauf des Motors zu entnehmen und nach Kühlung des Turbinenlagers wieder in diesen Kreislauf zurückzuführen, und für Abgaskrümmer und Turbine eine separate Kühlung durch Seewasser, das durch eine sowohl Abgaskrümmer und Turbine umgebende Kühleinrichtung geleitet wird, vorzusehen. Vorzugsweise wird das Kühlmittel zum Kühlen des Turbinenlagers dem Kühlmittelkreislauf stromaufwärts der Kühlmittelpumpe entnommen und stromabwärts der Kühlmittelpumpe wieder dem Kühlmittelkreislauf zugeführt.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben.
- Figur 1: zeigt eine Schnittdarstellung durch ein erfindungsgemäßes Turbinengehäuse gemäß der Schnittlinie I-I der Figur 3.
- Figur 2: zeigt einen weiteren Schnitt durch das erfindungsgemäße Turbinengehäuse der Figur 1 gemäß der Schnittlinie II-II der Figur 3.
- Figur 3: zeigt eine Teilschnittansicht des erfindungsgemäßen Turbinengehäuses der Figur 1 gemäß deren Schnittlinie III-III.
- Figur 4: zeigt eine perspektivische Darstellung des Turbinengehäuses der Figuren 1 bis 3 mit weiteren Komponenten zum Einbau in einem TurboladerVerbrennungsmotor für Marineanwendungen.
- Figur 5: zeigt eine schematische Darstellung der Kühlmittelführung in einem erfindungsgemäßen Turbolader-Verbrennungsmotor.
- Figur 6: zeigt schematisch den Motorkühlkreislauf eines erfindungsgemäßen Turbolader-Verbrennungsmotors unter Einbeziehung der Turbinenlagerkühlung.

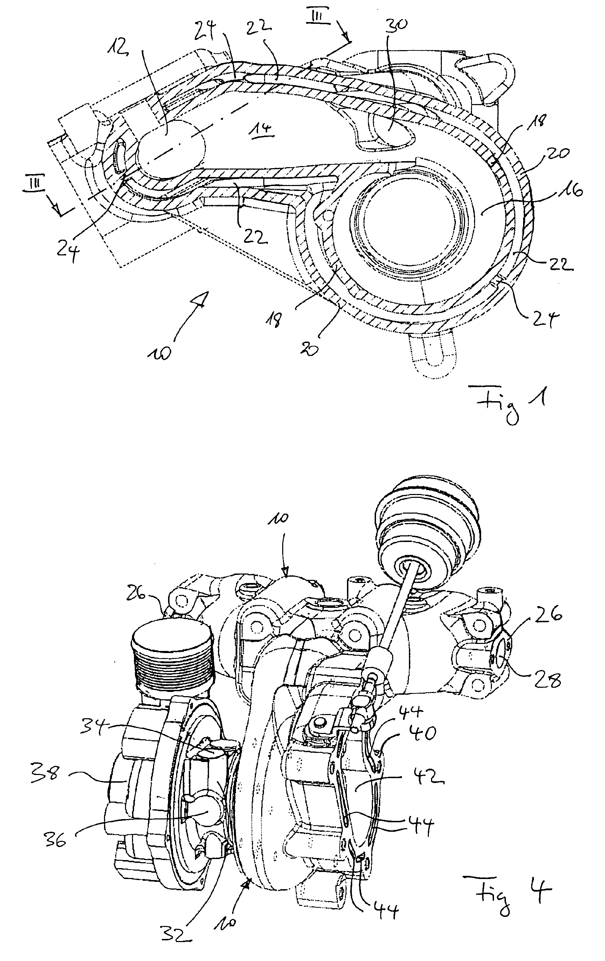

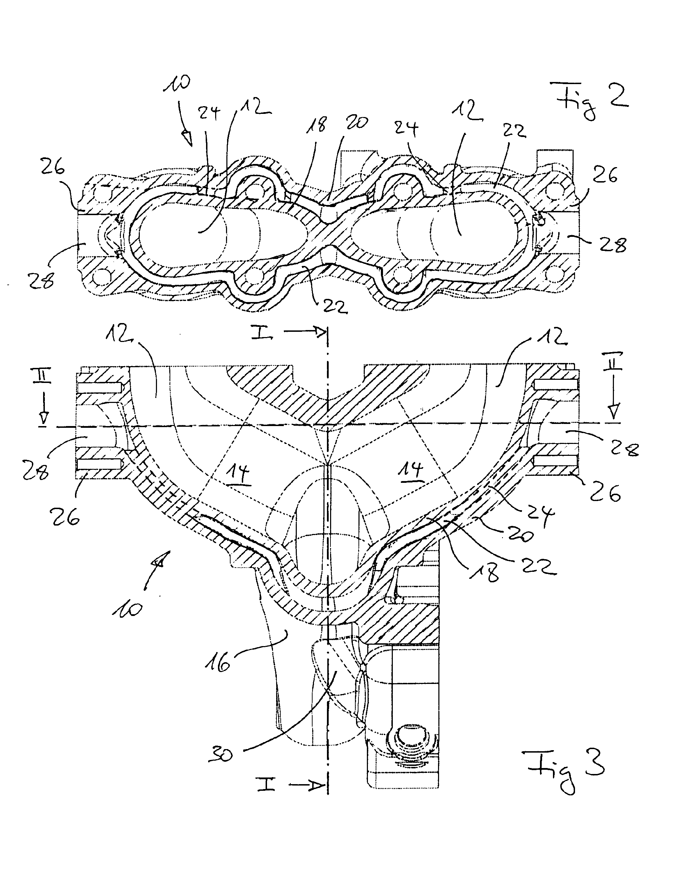

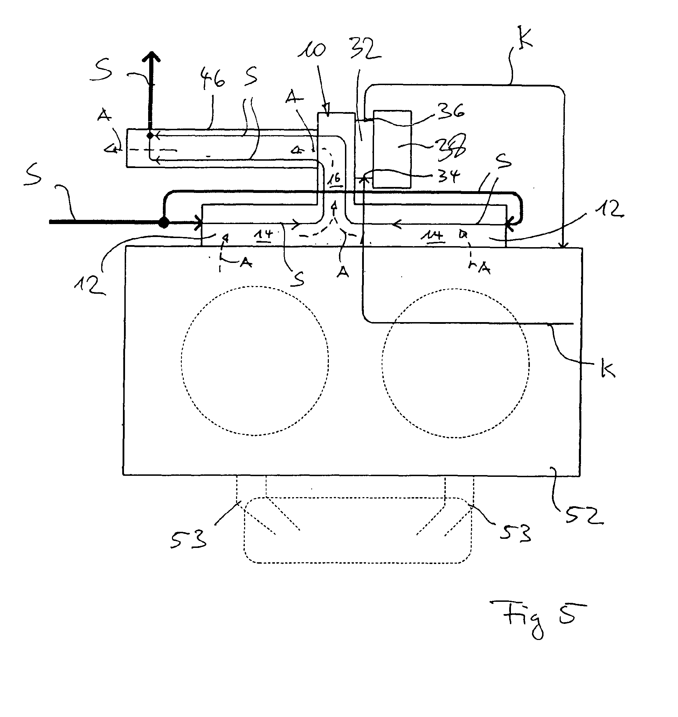

Figur 1 zeigt ein erfindungsgemäßes Turbinengehäuse 10, bei dem die herkömmlicherweise getrennten Bestandteile Abgaskrümmergehäuse und Turbinengehäuse einstückig ausgebildet sind. Das erfindungsgemäße Turbinengehäuse 10 umfaßt zwei Einzelkrümmer 12 (vgl. auch Figuren 2 und 3) mit Abgasführungskanälen 14, die in eine Turbine 16 münden.

Das erfindungsgemäße Turbinengehäuse 10 verfügt über eine Doppelwandung 18, 20, die zwischen ihren beiden Wandungen 18 und 20 einen Hohlraum 22 bildet. Der Hohlraum 22 stellt sich in den Schnittdarstellungen der Figuren 1 bis 3 als von Rippen 24 unterbrochener Kanal dar, wobei die Rippen 24 Verbindungsbrücken zwischen den beiden Wandungen 18 und 20 der Doppelwandung sind.

Der Hohlraum 22 ist mit Kühlmittel, insbesondere Seewasser, beaufschlagbar. Hierzu ist im Bereich jedes Einzelkrümmers 12 jeweils ein Flansch 26 mit einer Kühlmitteleintrittsöffnung 28 vorgesehen. Die beiden Einzelkrümmer 12 und die Kühlmitteleintrittsöffnungen 28 sind vorzugsweise symmetrisch ausgebildet, um eine möglichst gleichmäßige Umströmung mit Seewasser zu gewährleisten.

Das zur Kühlung dienende Seewasser tritt somit erfindungsgemäß durch die Kühlmitteleintrittsöffnung 28 in den Hohlraum 22 ein, wobei der Hohlraum 22 derart ausgebildet ist, daß die heißen, gasführenden Bereiche gleichmäßig umflossen werden. Das Seewasser umströmt somit zunächst die Abgaskanäle 14 der beiden Krümmer 12 und anschließend die Turbine 16. Nur schlecht zu kühlende Stellen im Innenbereich des Turbinengehäuses 10 können bei Bedarf als eingegossener Stahlinsert (anstatt Vollaluminium) ausgebildet sein. Dieser (nicht dargestellte) Stahlinsert kann als ein Feingußteil ohne Nachbearbeitung und damit kostengünstig ausgeführt sein.

In Figur 1 ist im Bereich der Einmündung des Abgaskanals 14 in die Schnecke der Turbine 16 eine Öffnung dargestellt, die einen Kanal 30 für eine Bypasszufuhr bildet (vgl. auch Figur 3).

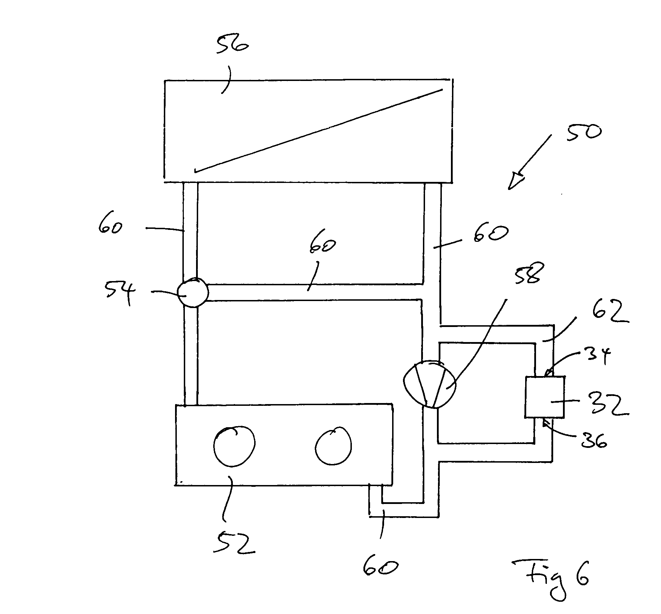

Figur 4 zeigt das erfindungsgemäße Turbinengehäuse 10 in perspektivischer Darstellung in Einbaustellung mit einigen weiteren Komponenten, insbesondere einem Lagergehäuse 32 und einem Verdichtergehäuse 38. Des weiteren ist in Figur 4 an dem Turbinengehäuse 10 ein Flansch 40 für ein Abgasrohr 46 (vgl. Figur 5) dargestellt. In dem Flansch 40 sind eine Abgasaustrittsöffnung 42 (Turbinenaustritt) und Austrittsöffnungen 44 des Hohlraumes 22 vorgesehen, durch die das Seewasser zum Kühlen des Turbinengehäuses 10 austreten kann. In dem dargestellten Ausführungsbeispiel der Erfindung tritt das Seewasser durch die Austrittsöffnungen 44 aus und wird in einem entsprechenden Doppelwandungshohlraum des Abgasrohres 46 weitergeführt und dient somit auch noch zur Kühlung des Abgasrohres.

Zur Kühlung des Lagergehäuses 32 ist erfindungemäß ein Kühlmittelkreislauf vorgesehen, wir er in Figur 6 stark schematisch dargestellt ist. Der Kühlmittelkreislauf 50 umfaßt einen Motorblock 52, der über einen Thermostat 54 mit einem Kühler 56 und einer Kühlmittelpumpe 58 mittels Leitungen 60 verschaltet ist. Diesem an sich bekannten Motorkühlkreislauf wird nun erfindungsgemäß über eine Zusatzleitung 62 Kühlmittel zur Kühlung des Turbinenlagers in dem Lagergehäuse 32 entnommen und anschließend dem Kühlkreislauf wieder zugeführt. Vorzugsweise erfolgt diese Kühlmittelabzweigung wie in Figur 6 dargestellt vor der Kühlmittelpumpe 58, und die Rückfuhr des Kühlmittels in den Kreislauf erfolgt stromabwärts der Kühlmittelpumpe 58 vor dem Motorblock 52.

Die Gesamtkühlmittelführung eines erfindungsgemäßen Turbolader-Verbrennungsmotors ist in Figur 5 stark schematisch dargestellt, wobei der Kühlmittelfluß durch Pfeile veranschaulicht ist. Figur 5 zeigt den Motorblock 52 mit Saugrohren 53, an den sich ein erfindungsgemäßes Turbinengehäuse 10 mit zwei Einzelkrümmern 12 und zugehörigen Abgaskanälen 14 und Turbine 16 anschließt. An den Turbinenaustritt 42 schließt sich ein Auspuffrohr 46 an. An dem Turbinengehäuse 10 sind außerdem Lagergehäuse 32 und Verdichtergehäuse 38 angeordnet. Abgase treten aus dem Motorblock 52 gemäß gestrichelt eingezeichneten Pfeilen A in die Einzelkrümmer 12 ein und strömen durch die Abgaskanäle 14 in die Turbine 16 und von dort in das Auspuffrohr 46, aus dem sie dann austreten. Der Fluß des Seewassers zur Kühlung des Turbinengehäuses 10 ist durch Pfeile S veranschaulicht und gestaltet sich wie vorstehend beschrieben. Kühlmittel aus dem Motorkühlkreislauf wird entsprechend den Pfeilen K über einen Kühlmitteleintritt 34 (vgl. auch Figuren 4 und 6) in das Lagergehäuse 32 eingeführt und durch einen Kühlmittelaustritt 36 wieder dem Kühlmittelkreislauf zurückgeführt.

## Patentansprüche

1. Turbinengehäuse für einen Turbolader-Verbrennungsmotor für Marineanwendungen, **gekennzeichnet durch** einen mit dem Turbinengehäuse einstückig ausgebildeten Abgaskrümmer (12, 14) und eine sowohl Turbine (16) als auch Abgaskrümmer (12, 14) umgebende Kühleinrichtung (18, 20, 22).

2. Turbinengehäuse nach Anspruch 1, bei dem die Kühleinrichtung ein durch Doppelwandung (18, 20) gebildeter, mit Kühlmittel beaufschlagbarer Hohlraum (22) ist.

3. Turbinengehäuse nach Anspruch 1 oder 2, bei dem an jedem Einzelkrümmer (12) des Abgaskrümmers ein Kühlmitteleintritt (28) vorgesehen ist.

4. Turbinengehäuse nach einem der Ansprüche 1 bis 3, bei dem ein Kühlmittelaustritt (44) an dem Turbinengehäuse vorgesehen ist.

5. Turbinengehäuse nach einem der Ansprüche 1 bis 4, bei dem ein in der Kühleinrichtung (18, 20, 22) Verwendung findendes Kühlmittel Seewasser ist.

6. Turbinengehäuse nach einem der Ansprüche 1 bis 5, mit einem Lagergehäuse (32) zur Aufnahme eines Turbinenlagers, wobei zur Kühlung des Lagergehäuses (32) ein von der Kühleinrichtung (18, 20, 22) des Turbinengehäuses (10) separater Kühlkreislauf vorgesehen ist.

7. Turbolader-Verbrennungsmotor für Marineanwendungen, mit einem Turbinengehäuse (10) nach einem der Ansprüche 1 bis 6.

8. Turbolader-Verbrennungsmotor nach Anspruch 7, bei dem eine Kühlung von Abgaskrümmer (12, 14) und Turbine (16) mittels Durchfließen der Kühleinrichtung mit Seewasser erfolgt.

9. Turbolader-Verbrennungsmotor nach Anspruch 7 oder 8, bei dem eine Kühlung des Turbinenlagers mittels aus einem Motorkühlkreislauf (50) abgezweigtem Kühlmittel erfolgt.

10. Verfahren zum Kühlen eines Turbolader-Verbrennungsmotors für Marineanwendungen, bei dem ein Motorblock (52) mit einem Thermostat (54), einem Kühler (56) und einer Kühlmittelpumpe (58) in einen Kühlmittelkreislauf (50) geschaltet ist und zur Kühlung eines Turbinenlagers des Turboladers Kühlmittel dem Kühlmittelkreislauf (50) entnommen und wieder zurückgeführt wird, und bei dem zur Kühlung von Abgaskrümmer (12, 14) und Turbine (16) Seewasser durch eine sowohl Abgaskrümmer und Turbine umgebende Kühleinrichtung (18, 20, 22) geleitet wird.

11. Verfahren nach Anspruch 10, bei dem das Kühlmittel dem Kühlmittelkreislauf (50) stromaufwärts der Kühlmittelpumpe (58) entnommen und stromabwärts der Kühlmittelpumpe (58) dem Kühlmittelkreislauf (50) wieder zugeführt wird.

12. Verfahren nach Anspruch 10 oder 11, bei dem das Seewasser im wesentlichen symmetrisch an jedem Einzelkrümmer (12) des Abgaskrümmers in die Kühleinrichtung (18, 20, 22) eingeleitet wird.
